# EUROPEAN PATENT SPECIFICATION

(11) **EP 4 575 392 B1**
(45) Date of publication and mention of the grant of the patent: **29.07.2026**
(21) Application number: 23218245.1
(22) Date of filing: 19.12.2023
(51) Int. Cl.: G01C 15/00

(54) **SURVEYING DEVICE WITH ARTICULATED ARM**
VERMESSUNGSVORRICHTUNG MIT GELENKARM
DISPOSITIF D'ARPENTAGE À BRAS ARTICULÉ

(43) Date of publication of application: 25.06.2025
(73) Proprietor: Hexagon Innovation Hub GmbH, 9435 Heerbrugg (CH)
(72) Inventor: METZLER, Bernhard, 6850 Dornbirn (AT)
(74) Representative: Kaminski Harmann

(56) References cited:
- EP-A1- 1 840 507
- US-A1- 2022 283 327
- US-A1- 2023 099 779
- US-B2- 8 516 711
- VIGHNESH VATSAL ET AL: "At Arm's Length", HUMAN-ROBOT INTERACTION, ACM, 2 PENN PLAZA, SUITE 701NEW YORKNY10121-0701USA, 1 March 2018 (2018-03-01), pages 271 - 272, XP058384406, ISBN: 978-1-4503-5615-2, DOI: 10.1145/3173386.3176965

## Description

The invention relates to a surveying device, method and system for referenced positioning or measuring according to the independent claims.

Geodetic instruments for surveying, i.e., measuring or projecting e.g. of point coordinates are known in the art. Such surveying appliances for tracking or marking and measuring spatial points on surfaces of a structure or object are particularly used for measuring of a surrounding or workpiece, in particular large entities such as fuselages, or construction or inspection of buildings, e.g., in course of BIM (Building Information Model) to Field-assignments or laying out building elements such as MEP (Mechanical Electrical Plumbing) installation, walls, anchor points etc. The distance and angle from a such measuring device to one or more target points to be surveyed can be recorded as spatial standard data.

On the other hand, planned position data, e.g. based on a digital building plan or CAD-data, can be projected in a position true manner on an object's surface by a laser beam for layout or stake-out purposes. Projection of visible or invisible points or lines is used for providing positional reference points or lines serving as a reference for either the human eye or for electronic systems and also allowing automatic positioning or machine guidance. Here, the reference lines are usually created by widening a laser beam, which is possible for straight lines in particular, or else by rotating projection of a laser point.

Visually indicated position (reference) marks can be used to assist manual manufacturing or construction steps done by means of a handheld tool, for example like a screwdriver, a wrench, a crimping tool, a rivet tool, a drill, a glue dispenser, etc., or particularly a power tool, which can for example be driven by electricity or air pressure. The reference marks help a user to apply a tool or work at correct positions, e.g., marking in a position true way planned bore holes in accordance with a construction plan or to mark areas to be spared, e.g., because of underlying hidden structures such as pipes or cables in a wall. In another example, an object surface is grinded, sanded, or planed and it can be measured or indicated if the grinding, sanding, or planing is to be continued or ended.

Surveying instruments are used for traditional geodesy (land surveying) or for geodetic measuring or stake-out in the industry (e.g. 3D-coordinate acquisition of workpieces for quality control) as well as for accurate construction of buildings like streets, tunnels or houses and for interior construction or assembly tasks, e.g., using templating, by designers like architects, kitchen makers, glaziers, tilers or staircase builders, e.g. for as-built data capture. It is emphasized that, in the present application, the terms "geodesy" and "geodetic" are not limited to the scientific discipline that deals with the measurement and representation of the surface of the earth, but relate in a broad sense to measuring, surveying and position determining or projection of object points in order to acquire digital object coordinates or layout or mark digital object coordinates in space.

In order to measure, survey or project a target or object point or a plurality of such points, numerous survey and measuring devices are known. For example, distance and direction or angle from a surveying device, the absolute position of which in a global reference system, to the target point to be surveyed are recorded as spatial standard data. Well-known modern examples of such geodetic surveying devices are tachymeters and total stations, which are also referred to as electronic tachymeter or computer tachymeter. Thereby, the position of individual terrain points such as land surveying points or points on construction site objects, for example in the interior or exterior region of buildings or in road construction, can be precisely determined with respect to position measurement or staking out.

Surveying or marking activities are often carried out by the interaction of a stationary device having a known location and thus offering a position reference with a receiving or marking or targetable auxiliary measurement instrument, particularly as it is often the case that the target point, e.g. a boundary marker, cannot be directly targeted by the surveying device due to obstacles which interrupt the line of sight.

Such surveying or stake-out procedures may require two users, one to operate the surveying device and one to place and hold the target or marker. In order to enable surveying by a user on his own, total stations or laser trackers according to the art have means for mechanizing the target optical unit, for automated target search and tracking and for remote control of the whole device, as a result of which measurements can be performed by means of a suitable remote-control unit from the target point. Modern total stations moreover contain microprocessors for digital further processing and storing of registered measurement data and a radio data interface for establishing a radio connection to external peripheral components such as e.g., a data-registering device, which can be embodied as a field computer in particular. By means of the data interface, it is possible to emit measurement data registered and stored by the surveying instrument for external further processing, to read externally registered measurement data into the total station for storage and/or further processing and to input or output remote control signals for remotely controlling the total station or a further external component, particularly in mobile field use.

Hence, points are surveyed in a number of geodetic applications by virtue of specially embodied target objects being placed thereon. According to the prior art, these consist of a rod as object support with a marking that can be targeted or with a retroreflector as target object. For surveying purposes, the tip of this plumb rod with the target point is brought into contact with the ground and held perpendicular to determine the direction. In so doing, in order to determine the distance, the rod will be aligned horizontally in such a way by rotating it about its vertical axis that the marking or the reflector reflects a light signal emitted by the surveying device back in the direction of the latter. Alternatively, use is made of 360° reflectors, which reflect light signals back from any horizontal alignment.

Even in industrial surveying, specifically embodied handheld targets or auxiliary measuring instruments for surveying a measurement point, in particular a plurality of measurement points, are used. These target instruments include contactlessly measuring sensors (for example mobile optical scanning units) and also what are known as probing tools which are positioned by way of their contact point on the measurement point on an object and thus permit surveying of said target point. Thus, there is measuring of objects with high accuracy. This applies in particular to the manufacturing or construction industry, for which measuring and checking surfaces of constructions or workpieces is highly important, in particular also for the purposes of quality control.

A problem in surveying with such targetable auxiliary instruments is that, as already indicated, a line of sight from the total station, laser tracker etc. to the target probe is needed, to enable targeting with a surveying instrument's measuring beam or taking images with its camera. Therefore, the operator has to take care that this line-of-sight is not blocked by himself or another object.

This need of guaranteeing a line of sight is a cumbersome demand which needs to pay quite of an amount of additional attention and a demand often not easily to fulfil, in particular in congested measurement scenarios or when measuring complex objects.

As some counteraction known in the art, surveying poles with GNSS-sensor for localization are used. However, GNSS signals are often of relatively low accuracy and in some places, no signal is available. Another countermeasure is using very long retroreflector poles such that the retroreflector is above a user's head when (vertically) positioned at a target point.

This however amplifies another disadvantage of using such an auxiliary device like a rod or targeting probe for geodetic or industrial surveying. That is, conveying and carrying a rod, which is generally more than two meters long and therefore unwieldy, is cumbersome to the user and laborious in terrain that is difficult to pass, e.g. a wooded area. Such poles, as for instance described by the EP 1645846 A1, have not only reflectors mounted, but today even controllers and sensors such as GNSS sensors or tilt sensors mounted on the pole directly, and accordingly also a battery, which results in a significant weight that has to be carried by the operator over a longer time. Moreover, perpendicular set up of the rod is connected to a certain amount of time expenditure and perpendicular holding during the measurement is arduous for the user. Incorrect setup of the rod at the target point is a source of error for an incorrect determination of position. More generally spoken, it is often difficult and cumbersome for an operator to handle and carry a measuring, marking or tooling device.

This is in particularly true in view of demands of high positional accuracy. For instance, a problem with carrying out a measurement with a measuring system with a camera or scanner often arises with manual, i.e. hand-held, measurements. Because in principle very high computing powers are necessary in order to record and to process a scatter plot of a surface in three-dimensions, in particular if recorded images or scan lines are to be merged because of a movement of the measuring system, the movement tolerance is usually significantly limited in relation to speed and vibration. A substantial steadiness of the measuring instrument when measuring is thereby mandatory and if not maintained is a major cause of generated measurement errors.

Prior art document US2022/283327A1 discloses a measurement system consisting of a total station and an auxiliary measurement instrument in the form of a pole that uses a method for determining positions on a construction site, e.g. by using a laser. It is therefore an object of the present invention to provide an improved surveying device.

A further object of the present invention is to provide a surveying device with improved user handling.

These objects are achieved by realizing the features of the independent claims. Features which further develop the invention in an alternative or advantageous manner are described in the dependent patent claims.

The invention relates to a wearable surveying device. The surveying device comprises a wearable designed to be carried by an operator and comprising an electric power unit and a computing unit. The surveying device further comprises an articulated arm having a first end and a second end, the second end being pivotably connected to the first end by at least a first articulated arm's joint. The arm has at least a first position encoder such as an angle encoder for determining a joint position (meaning in particular a rotational position).

The second arm's end comprises a fitting for, preferably releasably, mounting a tool and/or measuring device with a fixed and/or determinable and therefore defined positional relationship to the fitting.

The articulated arm is designed and attached to the wearable by the first end in such a way that when carried, the second end is freely and easily or relaxedly reachable for the operator and steerable by the operator directly by gripping of the second end and/or indirectly by gripping of a mounted measuring device and/or tool.

The surveying device further comprises a pose unit for actively and/or passively determining a position and orientation with respect to six degrees of freedom (6-Dof), based at least partly on (reception, transmission and/or relay of) a signal, denominated pose signal, received from and/or receivable by an external position reference, referenced in an external reference system (external to the surveying device). The pose signal serves for determination of at least one of said six degrees of freedom, in particular the three translational DoFs. That is, an external positional reference signal from a position reference instrument or position reference object -the denoted pose signal- can be collected (active signal based determination) or transferred (passive signal based determination) by the pose unit; passive signal based determination can also be implemented in that the surveying device emits a pose signal (instead of relay/reflection/transmission) which can be received by an external position reference device (though signal emittance as such is active, pose determination is not done by the pose unit -but by the external device receiving and detecting the signal emitted by the surveying device- and thus such a pose determination is passive in the understanding of the present invention). In any case, the pose signal allows for determination of at least one of said six DOFs (i.e. not necessarily all six DoFs or the full pose, but at least part of the 6-DoF pose).

The term (pose) "signal" is to be understood in a broad sense, comprising for example such external pose signals like GNSS signals, a surveying beam or light from a position reference object or the surveying device detectable by an image sensor. It is also to be understood that the term "position reference" as indicated above not only comprises position reference objects or passive units which are to be measured (such as an optical reference mark) but reference or referencing measuring devices (such as a total station or GNSS satellite) which are position referenced, in a reference system external to the surveying device.

At least part of the pose unit is arranged in an exposed position when then wearable is carried by the user for enabling an unobstructed propagation path of the pose signal. For example, the pose unit is attached to the wearable by an extension such that the pose unit is in a heightened position with regard to the user's body, preferably above the user's head, when the user carries the wearable, wherefore no part of the user's body obstructs the signal path from and/or to a reference object or instrument.

The articulated arm's first end and the pose unit are in a fixed and therewith defined positional relationship to each other by their attachment to the wearable.

The computer unit of the surveying device is configured to determine a 6-DoF position and orientation of a mounted measuring device and/or tool with respect to said external reference (system) by 6-DoF referencing the pose unit with respect to the external reference (system) by said 6-DoF position and orientation determining and by 6-DoF position referencing of the fitting with regard to the pose unit based on a determination of said joint position and said fixed and defined positional relationship of the articulated arm's first end and the pose unit, using said defined positional relationship of the measuring device and/or tool to the fitting.

In other words, position and orientation determined with the pose unit, at least partly based on a pose signal which provides a relation, link or connexion to an external reference system or position reference, is transferred via the articulated arm, in a controlled manner by the arm's at least one position encoder, to an end joint for mounting a measuring device or a tool. Thus, at the end, the pose of the mounted measuring device or tool is positionally referenced. The herewith disclosed wearable surveying device provides the advantage that most of the weight is carried near the user's torso, e.g. on the back, and not in the hand. Further, the pose unit provides positioning sensors and/or reflectors/marks arranged or mounted in such a way that is optimal for signal reception (by the surveying device and/or by an external device, e.g. for an unobstructed field-of-view of imaging pose cameras.

As an option, the pose unit comprises such a camera for image based position referencing, in particular using an image of an external reference marker and/or using a SLAM algorithm. Additionally or alternatively, the pose unit comprises a GNSS sensor, an inertial measurement unit (IMU) and/or an optical mark such as a retroreflector or optical sign or LEDs, targetable by an external geodetic opto-electronic surveying instrument.

As already indicated above, different components of the pose unit can be distributed about the surveying device, e.g., an IMU inside a backpack and retroreflectors on the outside of the backpack. Thereby, all such parts of the pose unit are in a defined or known positional relationship to another resp. to the articulated arm's first end.

As another option, the wearable is embodied as a backpack or a shoulder-upper arm-wearable.

In some embodiments, the surveying device comprises a laser pointer for emitting a visible laser beam with a defined positional relationship (of the emittance direction) to the second end. The laser pointer serves for indication of a target object point such as a stake-out point or point to be measured. The device further comprises a human machine interface for indication of an alignment of the laser beam to the target object point, for instance visual indication using LED lights or the laser beam itself (changing beam color or visibility in dependence of its correct alignment) and/or a speaker.

In another embodiment, the fitting comprises a data interface for receiving sensed data from a mounted measuring device and/or tool by the computing unit, whereby the computing unit is configured for evaluation of the sensed data.

As still another option, the computing unit is configured to evaluate sensor data and/or retrieve data from a database, for example a Building Information Model (BIM), in relation to an ongoing or planned measurement and/or machining procedure with a mounted measuring device and/or tool, to generate a notice based on an evaluation result and to output the notice to an operator via an operator interface. The notice provides operator instructions for the measurement and/or machining procedure and/or feedback of the measurement and/or machining procedure.

Optionally, the second end comprises an electronic user display and/or is designed to receive and connect to an external electronic display device such as a so-called smartphone. Thereby, the computing device is configured to provide an augmented reality view via a screen of the display showing a live camera image of an object to be measured and/or machined by a mounted measuring device and/or tool, the augmented reality view showing location-true positional reference data and/or user instructions related to a measuring and/or machining process. Alternatively or additionally, the surveying device is designed to automatically adapt a position of the display to an orientation of the second end, which includes orientation of the fitting, at least within an angular range of ±10° in relation to a zero or start orientation, such that a display's screen is kept in a pose enabling viewing by the operator. As still a further option, a displayed zoom level is automatically adapted to a position of the second end such as the position relative to an object or operator, whereby the position is determined based on the position of the at least one joint.

In some embodiments, the second end comprises an input interface and the computing unit is configured to receive a user input determining said positional relationship of the measuring device and/or tool to the fitting.

Optionally, the arm comprises a second joint for pivotably coupling the fitting to the second end and at least a second position encoder for determining a second joint position.

As another option, the fitting comprises an electrical contact for power supply of a mounted measuring device and/or tool by the electric power unit and/or a compressed air interface for supplying a tool with compressed air from a compressed air container situated in the wearable.

As still another option, the fitting is adaptable and/or exchangeable to enable mounting of differently designed and/or sized and/or configured measuring devices and/or tools.

As still another option, the fitting comprises a data interface for transferring commands and/or reference data from the computing unit to a mounted measuring device and/or tool.

The present invention also relates to a measuring and/or tool system comprising a wearable surveying device as claimed and a tool and/or measuring device. Thereby, the tool and/or measuring device is embodied as a surveying pole, with the option that the surveying pole itself is pose unit-free, i.e. does not have any unit such as a GNSS receiver or tilt sensor, and/or that the surveying pole comprises a distance measuring unit to contactlessly measure a distance to a point to be surveyed.

In other embodiments of the system, the mounted device is an electronic distance measuring instrument, a laser scanning instrument, a power tool, for instance a drilling or sawing machine, a fixture or gripper, or a marking instrument, for instance a laser pointer or sputter/sprayer.

In further developments of the system, the system, in particular the computing unit, is configured to reference measurement data measured with a mounted measuring device to said position reference (system) in the field such that an operator can verify measurements without delay and whilst still being at the measurement location for repeating or enhancing measurements if needed. For instance, the external position reference allows to determine measured points in an external reference system of a building model or a construction (site) plan when actually measuring or working in the building or on the construction site.

In another further development, the computing unit is configured to automatically apply a stored configuration parameter associated to a measuring device and/or tool, in particular a position and/or dimensional parameter such as a sensor and/or tool tip position, as said positional relationship of the measuring device and/or tool to the fitting.

Therefore, the system comprises means for automatic identification of at least a part of the measuring device and/or tool, for example based on a wireless signal and/or image based, and identifier based retrieval or request of said parameter. Alternatively or additionally, the system is designed in such a way that the computing unit receives the configuration parameter provided by the measuring device and/or tool upon mounting via a data interface at the fitting.

As an option for a system with an electrical measuring device and/or tool, this is solely powered by the electrical power unit of the wearable and the measuring device or tool itself is battery free.

The present invention also relates to a surveying system comprising an opto-electronic surveying instrument, in particular a total station or a laser tracker, and a wearable surveying device as claimed, having an optically targetable mark such as a retroreflector and/or LED.

The present invention also relates to a method of calibration of a system according to claim 14. The method comprises the steps of moving the mounted measuring device and/or tool by the operator into multiple different positions, in course of the moving, determining at least some of the positions in relation to the pose unit, based on the determined positions, defining a 6-DoF positional relationship of the tool and/or measuring device to the pose unit, in particular also defining a 6-DoF positional relationship of the tool and/or measuring device to the fitting and/or of the articulated arm's first end.

Thereby, the moving is a spherical moving in that one end of the measuring device and/or tool is fixed to a point in space as a sphere center point such that the positions are positions of the fitting and/or of the measuring device and/or tool on a surface of the sphere.

Alternatively or additionally, the mounted measuring device and/or tool comprises an optical calibration mark, and the determined positions are positions of the calibration mark which are determined based on images captured with a camera of the pose unit.

The present invention also relates to a computer program product comprising program code which is stored on a machine-readable medium, or being embodied by an electromagnetic wave comprising a program code segment, and having computer-executable instructions for performing, particularly when executed on a computing unit of a positing device according as claimed, the method as claimed.

Devices, methods, systems, setups and computer programs according to the invention are described or explained in more detail below, purely by way of example, with reference to working examples shown schematically in the drawing.

Specifically,
- Fig. 1: schematically shows an exemplary embodiment of a surveying system having a wearable surveying device;
- Figs. 2a,b: schematically show further exemplary embodiments of a wearable surveying device;
- Figs. 3a,b: schematically depict examples of calibration procedures for calibration of a wearable surveying device;
- Fig. 4: schematically illustrates an example of a surveying device comprising a user display unit;
- Figs. 5a,b: schematically show further exemplary embodiments of surveying systems comprising a surveying device and mounted measuring devices; and
- Fig. 6: shows another example of a surveying device.

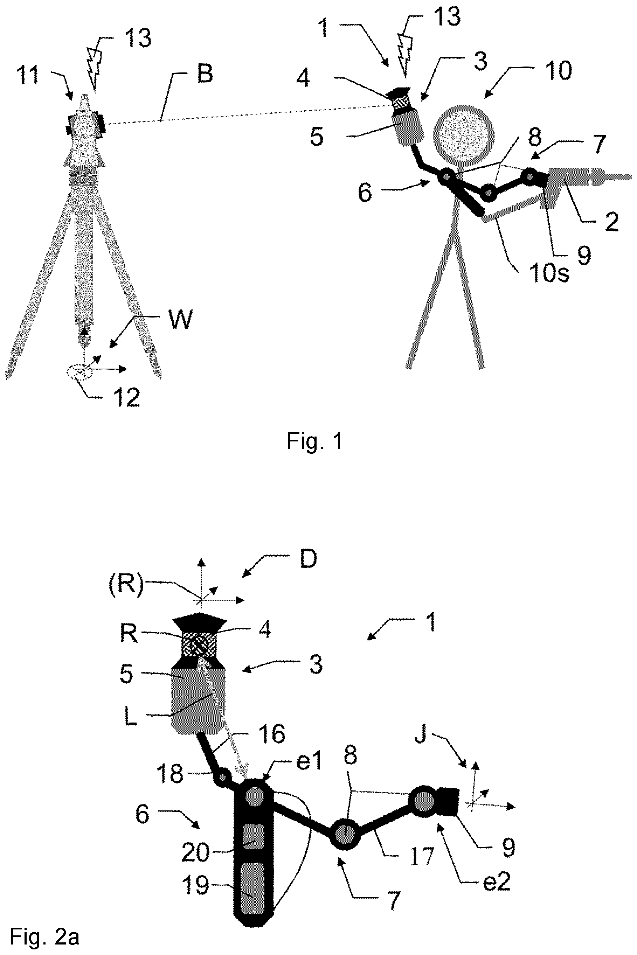

**Fig. 1** schematically shows an exemplary embodiment of a surveying or positioning system. In this example, the surveying system comprises a surveying or positioning device 1, a tool 2 attached to the surveying device 1 and a surveying instrument 11 such as a total station or laser tracker as in principle known in the art. The surveying device 1, which is also described in more detail and different embodiments in the following figures, comprises a wearable 6, in the example wearable by an operator 10 at the (upper) arm/shoulder.

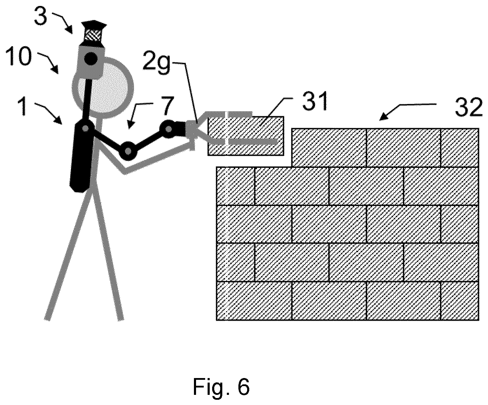

Attached to the wearable 6 is a pose unit 3 on the upper side and by its first end an articulated arm 7 at the lower side in defined positional relationship to another. The articulated arm 7 comprise one or more joints 8, the joint position of which is measurable by means such as an angular encoder (not shown). Releasably attached, by a fitting 9 to a second end of the articulated arm 7 is a measuring device or as shown in this exemplary figure a power tool 2 such as a drilling machine. Secure mounting of a releasable measuring device or tool 2 can be provided for instance by at least one of a magnet (with magnetic or ferromagnetic counterpart), one screw, one spring-loaded catch/claw, one twistable catch/claw, a bayonet fastening, one ball lock pin, etc. However as an alternative to exchangeable instruments, a working or measuring instrument such as exemplified power tool, or a surveying or measuring unit, a marker or a fixture or gripper (for gripping normed parts, e.g. bricks, tiles, etc., to place them accurately; see also figure 6) can also be fixedly mounted.

Thereby as shown in the example, the power tool 2 is held by the operator's arm 10s, too, such the tool 2 can be guided by the operator 10. Thereby, the arm 7 preferably is designed such that the tool's load or weight substantially is supported by the articulated arm 7 and has not to be carried by the operator's arm 10s.

The surveying instrument 11 is stationed separated from the positioning device 1 at a positional reference point 12. By this stationing at known geodetic point 12, a positional reference to a world, global or absolute reference system is given, this external reference system (external to the surveying device 1) schematically indicated in the figure by coordinate frame W. Examples for such reference systems are a local coordinate system referenced to a building or construction (site) or a (more) global reference systems such as WGS84 or ETRS89.

The positioning device 1 comprises said pose unit 3 which allows for full determination of pose, i.e., position and orientation. That is, the positioning device 1 has unit 3 for determining all six degrees - three translational and three rotational- of freedom (DoFs).

In the example, the pose unit 3 comprises a retroreflector 4, e.g. embodied as a 360°prism, as an example of an optical measurable and thus passive target which can be surveyed by the external surveying instrument 11 using a light beam B, e.g. a laser beam, as external pose (reference) signal with measuring a distance between instrument 11 and pose unit 3 respectively retroreflector 4 and an associated distance (e.g. by angular measurements with two angular encoders) as in principle known in the art of surveying. Therewith, a 3-DoF position of the unit 3 is determined, in the internal reference system of the surveying station 11 and -as this surveying instrument 11 is referenced in the global system as mentioned above and thus serves as position reference-, at the end referenced in this external reference system. In other words, the total station 11 tracks the reflector 4 and measures the position in relation to an outside reference system.

There are also special retroreflector arrangements known in the art which in addition allow to determine an orientation of the pose unit 3. Such a reflector arrangement has for example a plurality of sensor arrangements, -thus is active in this regard- with which an inclination determination with respect to at least one axis is provided. The inclination determination takes place by illuminating the respective sensor arrangement with the surveying instrument's measurement beam B -as exemplary pose signal- and determining the angle of incidence of the illumination radiation by detecting a location of a beam incidence pattern using a sensor associated with the respective sensor arrangement. Such a sensor is configured for determining a position of incidence for radiation that is incident on the detection surface of the sensor, for example as a CCD or CMOS. Depending on the configuration of the respective sensor arrangement (and of the illumination radiation), the angle of incidence and thus the inclination can be determined in one, two or three axes. With the knowledge of a propagation direction of the illumination radiation and the determinable angle of incidence, it is then possible to derive an orientation of the sensor arrangement and thus of the entire reflector arrangement respectively pose unit 3 with respect to at least one axis. Thus, at least one rotational DoF can be determined actively using an external pose reference signal B.

Alternatively or additionally to such a reflectors which allow for orientation determination besides position determination, the pose unit 3 comprises other means 5 for orientation determination. An orientation can be determined actively for example by internal means of a position or movement sensor such as an inclination sensor, acceleration sensor or an IMU (inertial measurement unit), which is provided e.g. in a housing of orientation sensor means 5 as depicted in a defined position and location relative to the reflector 4 or more generally spoken, in known position within the pose unit 3.

As another option, a passive orientation determination (i.e. not actively by the positioning device 1 itself) can be done using markings arranged on the pose unit 3 or elsewhere on the surveying device 1, with the positions of the markings being precisely known can be used. Such visual markings can be present on the positioning device 1 which are disposed, forming a pattern, on its body in a defined spatial relationship to one another and in relation to a point of origin of an internal coordinate frame of the pose unit 3 or positioning unit 1 in a marking region.

In particular, these visual markings may be provided by passive or active light spots able to be captured by a camera, wherein the markings are in particular formed by reflectors or by LEDs. The orientation is then determined by image processing of an image in which light of or from said markings -as an example of visual pose signals-, the relative location of which to one another is known, are captured with positional reference. The image can be captured by an image capture unit on the part of a surveying instrument 11. That is, in combination with the other sensor data, i.e., camera images, inertial measurements, etc. the 6 degrees-of-freedom of the pose unit 3 is computed, e.g., by applying a SLAM algorithm (Simultaneous Localization And Mapping). There are also surveying station 11 known in the art, which are designed such that six-degrees-of-freedom surveying of an auxiliary instruments such as positioning device 1 can be performed in a solely camera- or image-based manner, e.g. using light from reference markers installed in the environment as visual pose signals.

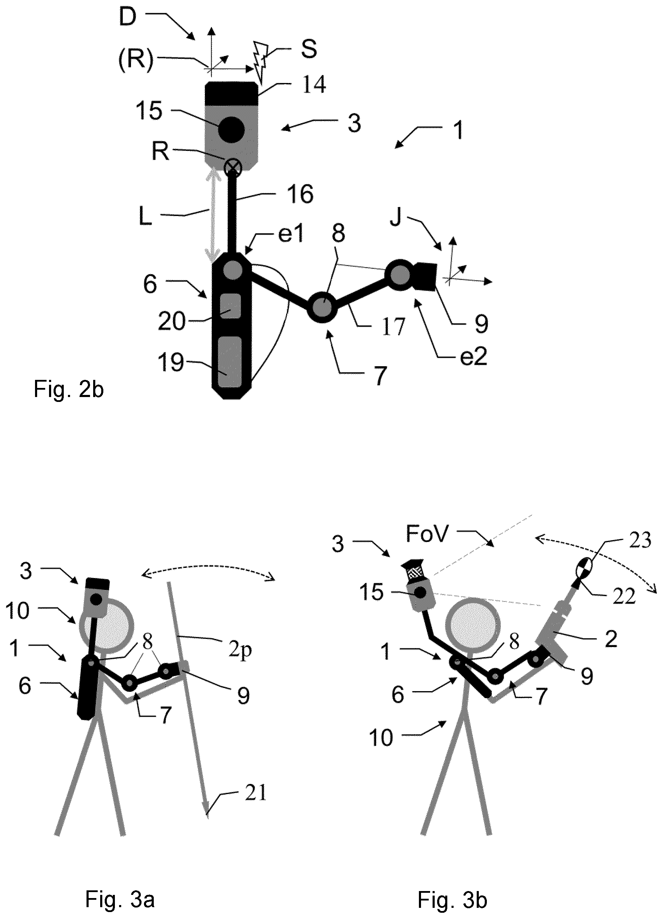

The above described embodiments are also examples of distribution of parts of the pose unit 3 about the device 1 (e.g., reflectors exposed on the back side -viewable or targetable by the surveying device 11 when the user 10 is drilling a hole in a wall-, an IMU inside the wearable and a GNSS receiver or cameras at exposed position on the top, above the user's head; cf. also figures 2a,b). All such components of the pose unit 3 are mounted rigidly together with known positional relationship to another.

Be it any such arrangement, the 6-DoF pose of the pose unit 3 can be measured by active means (e.g. using on-board sensors such as pose signal detectors/receivers on side of the pose unit 3 resp. surveying device 1, and/or other active sensors such as an IMU) and/or passive means (e.g. the pose unit 3 only provides a pose signal by transmission or emission which is evaluated externally, i.e. by sensors of an external position reference such as surveying instrument 11), whereby at least one of the six DoFs is determined with relation to some external position reference using said pose signal, e.g. surveying beam B which is used in the example to determine (at least) the three translational DoFs of pose unit 3.

As also the pose unit 3 and the articulated arm 7 are in defined positional relationship to each other as already mentioned, this means that also the articulated arm 7 is 6-DoF determined therewith, too. Due to the known positions of the joints 8, determined by their angular encoders, this is true also for the second end resp. fitting 9 of the arm 7.

Said arrangement of segments of the positioning system with fully defined translational and, where applicable, rotational relationships allows at the end to determine the 6-DoF pose of the tool 2 attached to or mounted to the articulated arm in the external, absolute or global reference system. That is, the known absolute position 12 is "picked up" by the surveying instrument 11, thus serving as position reference/being referenced in the external reference system, and is "forwarded" in the positional "chain" via pose unit 3 and articulated arm 7 to a mounted tool 2 (or the other way round, depending on the perspective). Hence, the device 1 enables surveyed (position true or referenced) positioning of a tool (or measuring device) 2 with support of an articulated arm 7. By means of the articulated arm 7, the position and orientation can be transmitted to the fitting 9 and from there to the tip point of the drilling machine 2, too.

Also, when using a tool 2 as shown, this allows for indication of absolute reference survey positions, e.g. in form of visualized reference lines or points, to an operator 10, as described in more detail below.

In case of a mounted sensor device, the positioning system resp. device 1 allows for handling of such a measuring device supported by the articulated arm 7 which eases its positioning. Further, the system allows for gathering sensor data with absolute positional reference.

Thereby, the surveying device 1, in particular the articulated arm 7, is designed in such a way that the operator 10 can easily and freely operate a mounted device 2. The articulated arm 7 is positioned and dimensioned to allow a relaxed work with or at its second end. For example, at least a portion of the articulated arm 7 can extend along at least a lower portion of user's arm. The second end or a device 2 attached to it can be gripped by a user's hand and guided or steered in a convenient fashion.

Therefore, for example the dimensions or position of the articulated arm 7 or the wearable 6 may be adaptable to optimally fit to an operator 10, e.g., to change a length of an articulated arm segment by a telescopic element or by adding a further arm segment to adapt to different lengths of arms of different users 10. In such a case, the articulated arm 7 can comprise means for automatically determining or identifying such positional or dimensional parameters of the surveying device 1, e.g., to measure a current arm length by a linear encoder, or a user may input such parameters to the device's computer or parameters are derived from a calibration procedure as exemplified below. Defined adaption or setting of dimensions of the surveying device 1 may also be applicable to other structures than its articulated arm 7, e.g. a height or tilt of the pose unit 3 or dimension, position or orientation of the fitting 9, which can also be determined and thus defined by sensor measurements of encoders or the like, user input or calibration. Such setting definition can further be applied to a mounted measuring device or tool 2.

In case the position referencing is done passively, i.e. by a measurement external to the positioning unit 1, e.g. by a total station as shown, external position reference data can be transferred to the device 1 resp. the operator 10 using a wireless transmittance (indicated by "flash" signs 13 in the figure) of said data. Hence, the surveying instruments 11 transmits the measured coordinates to the positioning device 1. Surveying instruments 11 known from the prior art often have a communication interface for establishing a wireless or radio link anyway.

In dependence on the level of expansion of the surveying instrument 11 such as a laser tracker or total station, such an instrument 11 often comprises means for a motorization of a targeting and sighting device and - in the case where retroreflectors 4 (for example a 360° prism) are used as target objects - means for automatic target finding and tracking. Hence, such surveying instruments 11 or more specifically a measuring of the positioning device 1 by the surveying instrument 11 could also be remotely controlled by the operator 10 via the communication channel 13, using a control panel of the surveying device 1.

**Figs. 2a****,** **2b** schematically show further exemplary embodiments of a mobile wearable surveying device 1 for positioning or measuring.

In both exemplary embodiments, the surveying device 1 comprises a wearable 6 in form of a backpack as central structure which supports the appendixes, comprising an articulated arm 7 and a pose unit 3. The pose unit 3 is arranged in a heightened position by a pole 16, e.g. in such a height above backpack 6 that it is above a user's head when worn.

The backpack can be worn by an operator and serves as a housing for a computing or processing unit 20 and a power supply 19 such as a battery for powering the computing unit and one or more of the appendixes, in particular angular encoders at joints 8 of the articulated arm 7, said joints 8 movably connecting arm segments 17 resp. connecting the arm 7 to the wearable 6 and the fitting 9 to the arm 7. If the pose unit 3 is active resp. comprises active components such as an electronic level sensor or the like, these are also supplied by the battery 19.

As already said, the arm 7 comprises multiple arm segments 17 connected by joints or articulations 8. The articulations 8 provide movability to a movable end e2 of the arm, which is opposed to the first end 1, and at the movable end e2 there is a fitting 9. Typically, a user 10 of the articulated arm 7 simply guides a tool or measurement device mounted to the arm 7 by fitting 9 to or along the surface of the object to be measured or worked on.

Said power unit 19 situated in the wearable 6 can also be used to supply a mounted measuring device or tool (not shown in the figure) wherefore the fitting 9 at the (second) end e2 of the arm comprises an electric interface or plug to which a sensor or tool is or can be electrically connected. Such an interface or an additional one at the second end e2 of the arm 7 can also provide a data channel to transmit data between the computing unit 20 and a mounted device, e.g. sending control instructions or receiving sensed data. Such measurement data can then be recorded and provided to a user or to external entities.

As mentioned, each of the articulations 8 of the arm 7 is equipped with a sensor to determine a positional information of the articulation 8, so that the pose of the arm 7 can be determined thereof and position and orientation of the second end e2 can be determined.

This pose of the second end e2 or fitting 9 can be related to the pose unit 3. More specifically, a positional relationship, indicated in figures 2a,b by arrow L, of the first end e1 of the articulated arm 7 to a center or zero point R of the pose unit 3 is defined. This spatial relation is defined in that it is either fixed and known, e.g. as a stored device parameter. In case the position can be adapted, e.g., by a joint 18 in the connection 16 as depicted in figure 2a, sensor means are provided such as an angular encoder in joint 18 to determine and store a current spatial relation between pose unit 3 and arm 7. In the embodiment of figure 2b, the length of rod 16 may e.g. be changeable by the operator to lower or raise the pose unit 3 and defined by measurement with a linear encoder (not shown). Together with said determined and thus defined positional relationship or pose of the second end e2 resp. fitting 9 to the first end e1 of the arm 7, the pose of the second end e2 with regard to the device's internal reference point R can be calculated.

In other words, as the articulated arm 7 is rigidly connected to the pose unit 3 and transfers the position and orientation (6 degrees-of-freedom) to the fitting 9 where a measuring sensor or tool can be mounted, the articulated arm 7 determines the transformation of a fittings coordinate frame J with respect to a pose unit or device coordinate frame D (with said reference point R as origin as indicated in the figures; the coordinate frames D and J are shown de-placed from their correct or "real" position at unit 3 resp. fitting 9 for better clarity of drawing). As already described above, the pose unit 3 determines the transformation of the device coordinate frame D with respect to the external reference system or the world coordinate frame W (see figure 1). Hence, the coordinates of the fitting 9 and therewith a mounted tool or measuring device can be transformed to this global coordinate frame W, if using the on-board computer preferably directly in the field.

Determining the 6-DoFs of the pose unit 3 resp. the position and orientation of the device's coordinate frame D to the external reference system W is for example provided by a target 4, measurable by an external reference instrument referenced in the absolute reference system W, and sensor means 5 such as an IMU, tilt sensors etc. as indicated in figure 2a and already described above.

Alternatively or additionally as indicated in figure 2b, the 6-DoF determination of the device 1 resp. internal reference frame D is done completely with active sensors onboard. For example, the pose unit 3 comprises a GNSS sensor 14 and one or more cameras 15 for localization and orientation determination, e.g., using image evaluation tools such as SLAM-algorithms or the like. Hence, a GNSS signal S (indicated in the figure by the flash symbol) and/or light of imaged reference objects serves as pose signal, having reference information with regard to position and/or orientation.

In some cases, the spatial relationship of a mounted tool or measuring device with regard to the fitting 9 is defined by fixation. That is, e.g. a position of a sensor internal reference point or a tool center point or tip to the fitting 9 resp. second end e2 is given by structure and treated by processing unit 20 as unalterable or as an coefficient. Hence, mounting is seen as thermally stable, and precisely reproducible if a fitting 9 for releasable mount is present, too.

In other cases, that is if the position or orientation of the mounted device to the fitting 9 or second end e2 can somehow vary, the definition of the positional relationship of a mounted device is done by measuring or calibration. Of course, also in cases of fixation, such a calibration can be done to first define (e.g., as a factory calibration) or verify (e.g., as a user calibration) the tool-fitting/tool-arm-relationship coefficient. Exemplary calibration procedures are described in context of the following figures.

**Figs. 3a, 3b** show examples of calibration procedures for calibration of a mobile surveying device 1. This exemplary calibration procedures determine the position of a tip point 21 of a pole 2p or tip point 22 of a drilling machine 2, respectively, -as purely exemplary measuring devices and tools- to the coordinate frame of the articulated arm's fitting 9 (not indicated here; cf. reference sign J in figures 2a,b)

In the example of figure 3a, a surveying pole 2p is mounted by fitting 9 to the articulated arm 7 of the surveying device 1, which has a backpack as wearable. The surveying pole 2p has a joint that enables the mounting and dismounting of the pole 2p to the fitting 9 while the six-degrees of freedom, i.e. position and orientation, of the pole 2p are preserved. As known from the art of surveying, the operator 10 can place the tip point 21 of the pole 2p on an object point for measuring or stake-out of this point.

As already mentioned above, the surveying device 1 resp. support of the mounted auxiliary measuring device 2p is designed such that the device's weight is taken by the articulated arm 7. Hence, the operator 10 carries -at least most of- the weight not at his hand but at his torso or back which is more convenient.

More effortless working with a surveying pole 2p than in some conventional surveying systems is further enabled in that the pole 2p can be "naked", i.e. free of additional sensors (at least positional sensors) or other attachments. Such units, which are often part of a measuring rod known in the art, are shifted to the surveying device 1. For instance, units for position or orientation determining such as a GNSS sensor or a retroreflector are located in the pose unit 3 (resp. in the articulated arm's position encoders) instead of being attached to the pole 2p where it would be much more cumbersome to handle.

The positional relationship of the pole 2p, or more specifically, of the pole tip 21 to the surveying device 1, or more specifically, to the fitting 9 can be fixed and stored as a known parameter. Thus, a terrain point or the like measured by placing the pole 2p by its tip 21 on the point can be positionally related to the fitting 9, and lastly to the pose unit 3 and global reference system as described above. Thereby, it is also possible to provide different fixed pole joints such that the length between fitting point and tip point 21 can be varied step wise. A current fixation position can then be indicated to the device's computing unit e.g. by input of the operator 10 or by indicating means such as an identification chip at each joint position.

As an alternative or in case mounting of the pole 2p can be freely varied, e.g. in that the pole 2p can be freely attached (more or less) continuously throughout its length, or in order to verify or re-calibrate said stored parameters, a calibration is done.

For calibration, the operator 10 places the pole 2p fixedly to a ground point by the pole's tip 21. Then, the operator 10 swivels the pole 2p, that is, moves the top end around in several directions while maintaining the ground end on its position, as indicated in the figure by the arrow (however, depiction is not to be understood that movement is restricted to a 2D-movement). Thus, the pole's top end describes a trajectory on a sphere's surface with the pole tip 21 resp. the surface point as sphere's center point.

As in principle known in the art, based on such a calotte movement, the direction and distance between the fitting 9 and the tip-point 21 can be calculated.

For example, the controller of the device 1 has a calotte calibration functionality wherein, in the execution of the calotte calibration functionality, at least three non-coplanar target positions linked with the terrain point 21 are determined based on the arm's joint encoder values, wherein the non-coplanar target positions are provided for example by at least three different alignments or inclinations of the rod 2p contacting the terrain point 21. Of course, more calibration positions are desirable for better calibration accuracy.

Thereby, a continuous determination of target positions can be performed for example at a previously predefined measuring rate, for example every tenth of a second, half a second or every second, or - possibly dynamically - adapted to a speed of the pivoting movement done by operator 10, measured for example on the basis of at least two measured target positions and their difference in time.

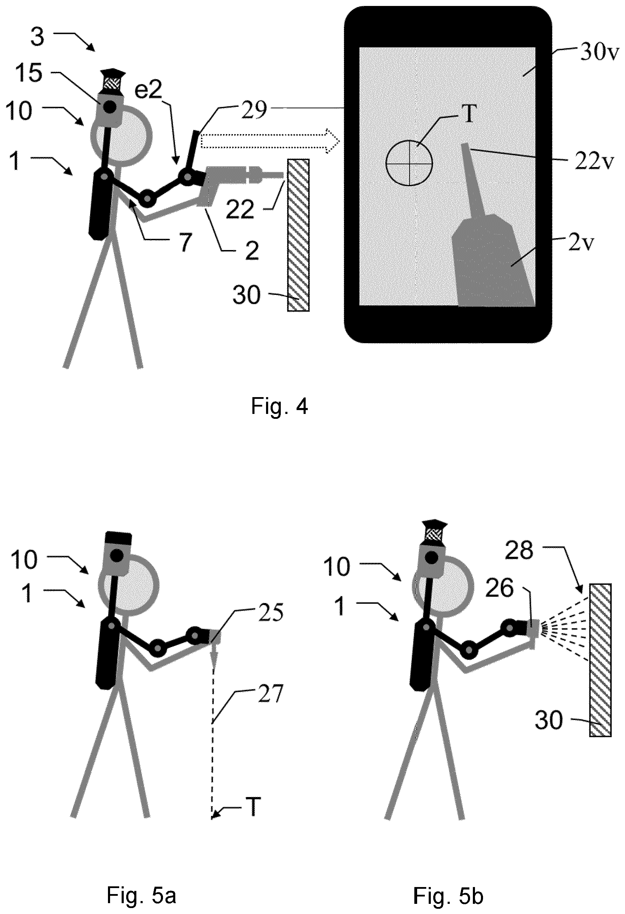

As an alternative to the pole embodiment shown, a ground point is surveyed contactlessly. That is, the pole 2p is substantially shortened compared to the depiction and comprises an electronic distance meter for determining a distance from its lower end to the ground point, see also the embodiment shown in figure 5a. Of course, with such a contactless pole, a calibration as described is not suitable, but other calibration methods are needed, as exemplified in the following.

Figure 3b shows another example of a calibration method. In the figure, a drilling machine 2 as an example of a tool is mounted to the articulated arm 7, which is attached to a shoulder-arm-wearable 6, as for instance also exemplified in figure 1. In order to calibrate the tip 22 of the tool 2, e.g. the end 22 of a bit, again, the mounted device 2 is moved by the user 10 (indicated by the arrow) whereby measurements are taken.

In this example, a calibration accessory having an optical calibration mark 23 is attached to the tip 22. The mounted tool 2 is then moved within the field of view (FoV) of a camera 15 of the pose unit 3. Therewith, the optical mark 23 is captured in different positions of the tool 2 in multiple camera images. The marker 23 is then detected in the images, e.g. by an image evaluation algorithm run by the control and evaluation unit of the surveying device 1. Methods for image based position determination are known in the art, e.g. disclosed in the WO 2005026767 A1.

For example, a camera image of the target mark 23 is taken and a stored target mark pattern is matched to, in particular made consistent with, the target mark in the camera image by means of image processing. A position of the pattern on the image sensor permits a calculation of the direction of a target mark point relative to the detection point.

In the event of rotation, some areas of the target mark 23 are situated closer to the observer than other areas, and therefore appear to be larger. From the quotients of the length and area dimensions-the depiction of which is distorted-of "front" and "rear" components, particularly also in comparison with the relative ratios in the "undistorted", i.e. nonrotated state (in this example 1:1), it is possible to determine the orientation in accordance with the front view by means of simple, known geometric considerations and calculations based thereon. Thereby, the stored target mark pattern can be rotated about a virtual axis, with the relevant line and area dimensions thereof changing in a precisely known and calculable manner until it can be exactly aligned with the image of the target mark 23.

Based on this information, e.g. a position or orientation of the mark 23 in the images, the tip-points coordinates with respect to the positioning device 1 is determined.

Also in this case, calibration may not be mandatory every time a tool 2 or part of it like a bit is changed. As already mentioned above, tool parameters can be stored and retrieved automatically or by users input and calibration can be done only from time to time to verify such stored tool position parameters. Thereby, as an option, the computing unit can notice a user when a calibration seems necessary, e.g., after a certain period of time or after sensed influences, e.g., mechanical shock or temperature drift. A user can for instance be notified by a display unit as described in the following.

**Fig. 4** shows an example of a surveying device 1 comprising a user display unit 29, whereby the display unit 29 is shown on the right side of the figure in an amplified view with an exemplary screen display.

In the example, the display 29 is attached to the second end e2 of the articulated arm 7. Thus, its screen can be looked at by the operator 10 when operating a mounted measuring device or tool such as drilling an object 30 with tool 2 as shown. Hence, information provided by the display unit 29 is visible for the operator 10 during measurement or manufacturing.

The display 29 may be an integral part of the device 1, e.g. be foldable or rollable when not used. Or the device 1 comprises an adapter to allow attachment of an external electronic display, whereby the adapter might also provide electrical connection in addition to a mechanical interface, for energy transfer or data communication.

Thereby, means can be provided to maintain an optimal view for the operator despite movement of the second end e2. For example, the device's control unit can be configured to adapt a zoom level depending on the display's position, in particular to enlarge view when the display 29 is moved away from the user 10 or the object 30 and vice versa. Hence, a dynamic automatic zooming of the artificial view presented by the display unit 29 can be provided, which is dependent upon a distance of the second end e2 to the desired point or region of the object 30 or user 10, wherein the artificial view has a reduced scale if the distance is larger in comparison to an increased scale if the distance is lower.

As another example, the displayed view can be held upright if the second end e2 and therewith the display 29 is rotated, either by pure algorithmical screen adaption or by mechanical compensation. Such mechanical adaption is for example automatically provided by using gravitation, e.g., a gimbal, or the arm 7 comprises motorization means for motorized adaption of the display's position based on arm's encoder readings.

In the example, the surveying device 1 is designed to provide a live image of the object 30 on the display 29, using a camera, e.g. the already mentioned camera 15 of pose unit 3 or a camera situated at the second end e2, e.g. integrated in the display device 29.

The object's live image 30v with the image 2v of the of tool 2, in particular showing the image tool tip 22v, is for example used to show an augmented reality (AR) view. In the example, a target point T is displayed as an overlay in the live image 30v. The target point T is for example selected by the operator 10 as a specific object position to be worked at, e.g. the position of a specific hole to be drilled, out of a set of predefined and stored positions, given in said external reference system. The selected position is the overlayed on the live-view in a position true manner, based on the 6-DoF-pose of the second end e2 resp. the mounted tool 2 defined in the external reference system as described above. This helps the operator 10 to align the tip 22 of drill 2 with the corresponding position T. Similarly, points to measure with a mounted measuring device or points to stake out could be shown as overlays.

Also, an artificial view of the object 30 can be computed as a computer-rendered view based on known information with respect to the object 30, in particular based on known CAD data (Computer Aided Design) or BIM data (Building Information Model) of the object 30 and displayed in a position true augmented view on the screen. For example, underlying known positions of hidden structures such as pipes or cables in a wall 30, retrieved from a building database, can be indicated as position-true virtual display objects, i.e. objects correctly associated in the reference system of the CAD or BIM-model, such that an operator 10 can avoid hitting them.

Alternatively or additionally, the device 1 may comprise projection means, built to provide such information as an optical projection of the indicative graphical elements in overlay onto and/or next to the object 30. That is, for example a target object point can be indicated by a visible laser beam onto object 30. A laser beam may also be visible to a mounted tool or sensor 2 (only).

Such a light projector can be located at the movable end e2 or elsewhere and project a laser beam, indicated a target position such as a point to be worked on, marked or measured or positional reference, e.g. a horizontal line. Thereby, the defined position and orientation of the device 1 and therewith light projector, relative to the object 30, can be used to indicate a degree of desired alignment, for example in that a flash light at least roughly indicates a distance to a target point by change between red-yellow-green, either using the device 29, LED's at the arm or the color of the pointing laser itself. Such a user guiding can also be an acoustic one, e.g. using sounds of different height, pattern or volume or by computer generated words..

Further information which may be shown to the user 10 by a human machine interface such as device 29 or indicative laser pointer may include conditions or parameters of the surveying system or device 1, object 30 or tool 2, e.g., battery status, pose or position status (e.g., when 6-DoF referencing is finalized) or accuracy, current health, stored object dimensions or information about object material, etc. Also, instructions for operation can be displayed, such as (settings of) a tool 2 or measuring sensor to be applied, or a warning, e.g., if the current handling of a tool or sensor 2 is inappropriate, for example out of measuring range or a skewed handling.

For example, displayed are geometrical object features, in particular a point, a line and/or an area, a desired direction to move a probe or tool head, a desired target point or area to be approached with the probe head, already determined measurement results such as a measured point, line or area, absolute and/or relative coordinate values of at least one already measured and/or to be measured points, lines or areas, deviations from a desired value and/or its tolerance-band of at least one of already measured points, lines or areas, a dimensioning of geometrical features of the object or a measurement protocol of already measured geometrical features.

A user display 29 and the controller can also be used to take part of an above mentioned calibration functionality in that an instruction to the operator 10 with respect to pivoting the surveying device 1 for generating said non-coplanar target positions, e.g., indicating a swivel direction, amount or pattern. In particular, information can be computed and displayed with respect to an optimum, in particular homogeneous and/or large-area, arrangement of the calibration target positions, or a level of accuracy of calibration.

**Figs. 5a, 5b** show further exemplary embodiments of surveying systems comprising a surveying device 1 and mounted measuring devices 25, 26.

In the example shown in figure 5a, there is a disto-measuring device 25 as in principle known in the art mounted to the positioning device 1. The operator 10 can aim the electronic distance meter 25 to a measuring point T and carry out a distance measurement by the distance meter's measuring beam 27.

In this embodiment, the displacement of the disto-measuring device 26 in the fitting coordinate frame J (see figures 2a,b) is known from and defined by the mechanical design of the mounting, e.g., having a "click"-fitting. In other words, the origin of the distance measurement and the measurement direction are fixedly given and known in the coordinate frame J which enables the computation of the coordinates of the measuring point T in the coordinate frame J by applying the measured distance. These coordinates can then be transformed from the coordinate frame J via the device coordinate frame D to the external world coordinate frame W.

Figure 5b shows a scanning device 27 mounted to the positioning device 1. As in principle known, such a laser scanning device 26 surveys the surface of an object 30 by a laser beam 28 rotated about one or two axes, thereby measuring angular or emitting direction and distance to a respective object point.

In this embodiment, the displacement of the scanning device 26 or the positional relationship of a scanning point of origin with respect to the fitting coordinate frame is known from the mechanical design or from calibration. Calibration can be done for instance as described above using an optical calibration mark or by defined scanning of a reference object.

Further exemplary measuring devices can comprise for instance a camera head with at least one camera, a stereo camera or a multi-photo measuring head. Sensor features can also be mixed in one and the same head, e.g., a sensor module with a camera and a pointing or measuring laser.

Fig. 6 shows another example of a surveying device 1. In this example, the surveying device's articulated arm 7 is fitted with a tool 2g embodied as a gripper. The user 10 can grip parts such as a brick 31 using the gripper 2g to build for example a wall 32.

Using the positional capacities of the surveying device 1, the user 10 can accurately position a brick 31. The positional reference given by the pose unit 3 allows to place objects such as brick 31, using the gripper 2g, in a positionally defined manner, i.e. in relation to an external known position reference. Thereby, above described user guidance for example by visual or acoustic means can also be used as user guidance for placing objects 31.

A skilled person is aware of the fact that details, which are here shown and explained with respect to different embodiments, can also be combined with details from other embodiments and in other permutations in the sense of the invention as defined by the claims.

## Claims

1. Wearable surveying device (1) having
• a wearable (6) designed to be carried by an operator (10) and comprising an electric power unit and a computing unit,
• an articulated arm (7) having
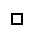 a first end and a second end (e1, e2), the second end (e2) being pivotably connected to the first end (e1) by at least a first joint (8), whereby the second end (e2) comprises a fitting (9) for, in particular releasably, mounting a tool and/or measuring device (2, 2p, 2g, 25, 26) with a defined positional relationship to the fitting (9),
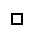 at least a first encoder, in particular an angular encoder, for determining a joint position,
whereby the articulated arm (7) is designed and attached to the wearable (6) by the first end (e1) in such a way that the second end (e2) is freely and easily reachable for the operator (10) and steerable by the operator (10) directly by gripping of the second end (e2) and/or indirectly by gripping of a mounted measuring device and/or tool (2, 2p, 2g, 25, 26)
• a pose unit (3) designed for actively and/or passively determining a position and orientation with respect to six degrees of freedom (6-Dof), whereby at least one degree of freedom is determinable based on a pose signal (B, S) received from and/or receivable by an external position reference (11), whereby at least part of the pose unit (3) is arranged in an exposed, position when the wearable (6) is carried by the user (10), in particular arranged above the user's head, for enabling an unobstructed propagation path of the pose signal (B, S), ,
the articulated arm's first end (e1) and the pose unit (3) being in a fixed and defined positional relationship (L) to each other,
whereby the computer unit is configured to determine a 6-DoF position and orientation of the mounted measuring device and/or tool (2, 2p, 2g, 25, 26) with respect to the external position reference (11, W)
• by 6-DoF referencing the pose unit (3) with respect to the external position reference (11, W) by said 6-DoF position and orientation determining and
• by 6-DoF position referencing of the fitting (9) with regard to the pose unit (3) based on a determination of said joint position and said fixed and defined positional relationship (L) of the articulated arm's first end (e1) and the pose unit (3),
using said defined positional relationship of the measuring device and/or tool (2, 2p, 2g, 25, 26) to the fitting (9).

2. The surveying device (1) according to claim 1,
**characterized in that**
the pose unit (3) comprises at least one of
• a GNSS sensor (14),
• an inertial measurement unit (5),
• a camera (15) for image based position referencing, in particular using an image of an external reference marker and/or using a SLAM algorithm,
• an optical mark (4), targetable by an external opto-electronic surveying instrument (11).

3. The surveying device (1) according to one of the preceding claims,
**characterized in that**
the wearable (6) is embodied as a backpack or a shoulder-upper arm-wearable.

4. The surveying device (1) according to one of the preceding claims,
**characterized in that**
the surveying device (1) comprises
• a laser pointer for emitting a visible laser beam with a defined positional relationship to the second end (e2) for indication of a target object point (T) and
• a human machine interface (29) for indication of an alignment of the laser beam to the target object point (T).

5. The surveying device (1) according to one of the preceding claims,
**characterized in that**
the fitting (9) comprises a data interface for receiving sensed data from a mounted measuring device and/or tool (2, 2p, 2g, 25, 26) by the computing unit, whereby the computing unit is configured for evaluation of the sensed data.

6. The surveying device (1) according to one of the preceding claims,
**characterized in that**
the computing unit is configured to evaluate sensor data and/or retrieve data from a database in relation to a measurement and/or machining procedure, generate a notice based on an evaluation result and output the notice to the operator (10) via an operator interface (29), the notice providing operator instructions for and/or feedback of the measurement and/or machining procedure.

7. The surveying device (1) according to claim 6,
**characterized in that**
the second end (e2) comprises an electronic user display (29) and/or is designed to receive and connect to an external electronic display, whereby
• the computing device is configured to provide an augmented reality view (30v) via a screen of the display showing a live camera image of an object (30) to be measured and/or machined, the augmented reality view showing location-true positional reference data and/or user instructions related to a measuring and/or machining process, and/or
• the surveying device (1) is designed to automatically adapt
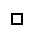 a position of the display to an orientation of the second end (e2) at least within an angular range of ±10° in relation to a zero or start orientation and/or
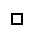 a displayed zoom level to a position of the second end (e2), the position being determined based on the joint position.

8. The surveying device (1) according to one of the preceding claims,
**characterized in that**
the second end (e2) comprises an input interface and the computing unit is configured to receive a user input determining said positional relationship of the measuring device and/or tool (2, 2p, 25, 26) to the fitting (9).

9. A measuring and/or tool system comprising a wearable surveying device (1) according to any one of the preceding claims and a tool and/or measuring device (2, 2p, 2g, 25, 26), the tool and/or measuring device (2, 2p, 2g, 25, 26) being embodied as at least one of
• a surveying pole (2p), in particular whereby the surveying pole is pose unit-free,
• an electronic distance measuring instrument (25),
• a laser scanning instrument (26),
• a power tool (2), in particular a drilling or sawing machine,
• a fixture or gripper (2g),
• a marker, in particular a laser pointer or sputter.

10. The system according to claim 9,
**characterized in that**
the system, in particular the computing unit, is configured to reference measurement data measured with a mounted measuring device (2p, 25, 26) to the position reference in the field.

11. The system according to one of claims 9 or 10,
**characterized in that**
the computing unit is configured to automatically apply a stored configuration parameter associated to a measuring device and/or tool (2, 2p, 2g, 25, 26), in particular a position parameter, specifically a position of a sensor tip and/or tool tip (21, 22), as said positional relationship of the measuring device and/or tool (2, 2p, 2g, 25, 26) to the fitting (9), wherefore
• the system comprises means for automatic identification of at least a part of the measuring device and/or tool (2, 2p, 2g, 25, 26), and identifier based request of said parameter, and/or
• the system is designed in such a way that the computing unit receives the configuration parameter provided by the measuring device and/or tool (2, 2p, 2g, 25, 26) upon mounting via a data interface at the fitting (9).

12. The system according to one of claims 9 to 11,
**characterized in that**
in case of an electrical measuring device and/or tool (2, 2p, 2g, 25, 26), it is solely powered by the electrical power unit of the wearable.

13. A surveying system comprising an opto-electronic surveying instrument (11), in particular a total station or a laser tracker, and a wearable surveying device (1) according to claim 2 having an optically targetable mark (4).

14. A method of calibration of a system according to claim 9, the method comprising
• moving the mounted measuring device and/or tool (2, 2p, 2g, 25, 26) by the operator (10) into multiple different positions,
• in course of the moving, determining at least some of the positions in relation to the pose unit (3),
• based on the determined positions, defining a 6-DoF positional relationship of the tool and/or measuring device (2, 2p, 2g, 25, 26) to the pose unit (3), whereby
• the moving is a spherical moving in that one end (21) of the measuring device and/or tool (2, 2p, 2g, 25, 26) is fixed to a point in space as a sphere center point such that the positions are positions of the fitting (9) and/or of the measuring device and/or tool (2, 2p, 2g, 25, 26) on a surface of the sphere, and/or
• the mounted measuring device and/or tool (2, 2p, 2g, 25, 26) comprises an optical calibration mark (23), and the determined positions are positions of the calibration mark (23) which are determined based on images captured with a camera (15) of the pose unit (3).

15. Computer program product comprising program code which is stored on a machine-readable medium, or being embodied by an electromagnetic wave comprising a program code segment, and having computer-executable instructions for performing, particularly when executed on a computing unit of a positing device according to claim 1, the method according to claim 14.

## Patentansprüche

1. Tragbare Vermessungsvorrichtung (1) mit
• einem tragbaren Gerät (6), das dafür ausgelegt ist, von einem Bediener (10) getragen zu werden, und das eine Stromversorgungseinheit und eine Recheneinheit umfasst,
• einem Gelenkarm (7) mit
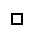 einem ersten Ende und einem zweiten Ende (e1, e2), wobei das zweite Ende (e2) durch mindestens ein erstes Gelenk (8) schwenkbar mit dem ersten Ende (e1) verbunden ist, wobei das zweite Ende (e2) ein Anschlussstück (9) zum insbesondere lösbaren Montieren eines Werkzeugs und/oder einer Messvorrichtung (2, 2p, 2g, 25, 26) mit einer definierten Positionsbeziehung zu dem Anschlussstück (9) umfasst,
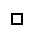 mindestens einem ersten Codierer, insbesondere einem Winkelcodierer, zur Bestimmung einer Gelenkposition,
wobei der Gelenkarm (7) so ausgelegt und durch das erste Ende (e1) mit dem tragbaren Gerät (6) verbunden ist, dass das zweite Ende (e2) für den Bediener (10) frei und leicht erreichbar ist und vom Bediener (10) direkt durch Ergreifen des zweiten Endes (e2) und/oder indirekt durch Ergreifen einer/eines montierten Messvorrichtung und/oder Werkzeugs (2, 2p, 2g, 25, 26) gesteuert werden kann,
• einer Stellungseinheit (3), die zur aktiven und/oder passiven Bestimmung einer Position und Orientierung in Bezug auf sechs Freiheitsgrade (6-Dof) ausgelegt ist, wobei mindestens ein Freiheitsgrad auf der Grundlage eines Stellungssignals (B, S) bestimmbar ist, das von einer externen Positionsreferenz (11) empfangen wird und/oder durch diese empfangen werden kann, wobei zumindest ein Teil der Stellungseinheit (3) in einer freiliegenden Position angeordnet ist, wenn das tragbare Gerät (6) vom Benutzer (10) getragen wird, insbesondere über dem Kopf des Benutzers angeordnet ist, um einen ungehinderten Ausbreitungsweg des Stellungssignals (B, S) zu ermöglichen,
wobei sich das erste Ende (e1) des Gelenkarms und die Stellungseinheit (3) in einer festen und definierten Positionsbeziehung (L) zueinander befinden,
wobei die Recheneinheit dafür konfiguriert ist, eine 6-DoF-Position und -Orientierung der/des montierten Messvorrichtung und/oder Werkzeugs (2, 2p, 2g, 25, 26) in Bezug auf die externe Positionsreferenz (11, W)
• durch 6-DoF-Referenzierung der Stellungseinheit (3) in Bezug auf die externe Positionsreferenz (11, W) mittels der 6-DoF-Positions- und Orientierungsbestimmung und
• durch 6-DoF-Positionsreferenzierung des Anschlussstücks (9) bezüglich der Stellungseinheit (3) auf der Grundlage einer Bestimmung der Gelenkposition und der festen und definierten Positionsbeziehung (L) des ersten Endes (e1) des Gelenkarms und der Stellungseinheit (3) zu bestimmen,
wobei die definierte Positionsbeziehung der Messvorrichtung und/oder des Werkzeugs (2, 2p, 2g, 25, 26) zu dem Anschlussstück (9) verwendet wird.

2. Vermessungsvorrichtung (1) nach Anspruch 1,
**dadurch gekennzeichnet, dass**
die Stellungseinheit (3) mindestens eines von Folgendem umfasst:
• einen GNSS-Sensor (14),
• eine inertiale Messeinheit (5),
• eine Kamera (15) zur bildbasierten Positionsreferenzierung, insbesondere unter Verwendung eines Bilds eines externen Referenzmarkers und/oder unter Verwendung eines SLAM-Algorithmus,
• eine optische Markierung (4), die von einem externen optoelektronischen Vermessungsinstrument (11) anvisiert werden kann.

3. Vermessungsvorrichtung (1) nach einem der vorstehenden Ansprüche,
**dadurch gekennzeichnet, dass**
das tragbare Gerät (6) als ein Rucksack oder ein als an Schulter und Oberarm tragbares Gerät ausgebildet ist.

4. Vermessungsvorrichtung (1) nach einem der vorstehenden Ansprüche,
**dadurch gekennzeichnet, dass**
die Vermessungsvorrichtung (1) Folgendes umfasst:
• einen Laserpointer zum Aussenden eines sichtbaren Laserstrahls mit einer definierten Positionsbeziehung zum zweiten Ende (e2) zur Anzeige eines Zielobjektpunkts (T) und
• eine Mensch-Maschine-Schnittstelle (29) zur Anzeige einer Ausrichtung des Laserstrahls auf den Zielobjektpunkt (T).

5. Vermessungsvorrichtung (1) nach einem der vorstehenden Ansprüche,
**dadurch gekennzeichnet, dass**
das Anschlussstück (9) eine Datenschnittstelle umfasst, um erfasste Daten von einer/einem montierten Messvorrichtung und/oder Werkzeug (2, 2p, 2g, 25, 26) durch die Recheneinheit zu empfangen, wobei die Recheneinheit zur Auswertung der erfassten Daten konfiguriert ist.

6. Vermessungsvorrichtung (1) nach einem der vorstehenden Ansprüche,
**dadurch gekennzeichnet, dass**
die Recheneinheit dafür konfiguriert ist, Sensordaten auszuwerten und/oder Daten aus einer Datenbank im Zusammenhang mit einem Mess- und/oder Bearbeitungsvorgang abzurufen, auf der Grundlage eines Auswertungsergebnisses eine Meldung zu generieren und die Meldung über eine Bedienerschnittstelle (29) an den Bediener (10) auszugeben, wobei die Meldung Bedienungsanweisungen für den Mess- und/oder Bearbeitungsvorgang und/oder Rückmeldungen von diesem bereitstellt.

7. Vermessungsvorrichtung (1) nach Anspruch 6,
**dadurch gekennzeichnet, dass**
das zweite Ende (e2) eine elektronische Benutzeranzeige (29) umfasst und/oder dafür ausgelegt ist, eine externe elektronische Anzeige zu empfangen und damit verbunden zu werden, wobei
• die Rechenvorrichtung dafür konfiguriert ist, über einen Bildschirm der Anzeige eine Augmented-Reality-Ansicht (30v) bereitzustellen, die ein Live-Kamerabild eines zu messenden und/oder zu bearbeitenden Objekts (30) zeigt, wobei die Augmented-Reality-Ansicht ortsgenaue Positionsreferenzdaten und/oder Benutzeranweisungen im Zusammenhang mit einem Mess- und/oder Bearbeitungsprozess anzeigt, und/oder
• die Vermessungsvorrichtung (1) dafür ausgelegt ist, automatisch
o eine Position der Anzeige an eine Orientierung des zweiten Endes (e2) zumindest innerhalb eines Winkelbereichs von ±10° in Bezug auf eine Null- oder Startorientierung und/oder
o eine angezeigte Zoomstufe an eine Position des zweiten Endes (e2) anzupassen, wobei die Position auf der Grundlage der Gelenkposition bestimmt wird.

8. Vermessungsvorrichtung (1) nach einem der vorstehenden Ansprüche,
**dadurch gekennzeichnet, dass**
das zweite Ende (e2) eine Eingabeschnittstelle umfasst und die Recheneinheit dafür konfiguriert ist, eine Benutzereingabe zu empfangen, die die Positionsbeziehung der Messvorrichtung und/oder des Werkzeugs (2, 2p, 25, 26) zu dem Anschlussstück (9) bestimmt.

9. Mess- und/oder Werkzeugsystem, umfassend eine tragbare Vermessungsvorrichtung (1) nach einem der vorstehenden Ansprüche und ein Werkzeug und/oder eine Messvorrichtung (2, 2p, 2g, 25, 26), wobei das Werkzeug und/oder die Messvorrichtung (2, 2p, 2g, 25, 26) als mindestens eines von Folgendem ausgebildet ist:
• ein Vermessungsstab (2p), wobei der Vermessungsstab insbesondere frei von einer Stellungseinheit ist,
• ein elektronisches Entfernungsmessinstrument (25),
• ein Instrument zum Laserscannen (26),
• ein Elektrowerkzeug (2), insbesondere eine Bohr- oder Sägemaschine,
• eine Halterung oder ein Greifer (2g),
• ein Marker, insbesondere ein Laserpointer oder Sputter.

10. System nach Anspruch 9,
**dadurch gekennzeichnet, dass**
das System, insbesondere die Recheneinheit, dafür konfiguriert ist, mit einer montierten Messvorrichtung (2p, 25, 26) gemessene Messdaten auf die Positionsreferenz im Feld zu beziehen.

11. System nach einem der Ansprüche 9 oder 10,
**dadurch gekennzeichnet, dass**
die Recheneinheit dafür konfiguriert ist, automatisch einen gespeicherten Konfigurationsparameter, der einer Messvorrichtung und/oder einem Werkzeug (2, 2p, 2g, 25, 26) zugeordnet ist, insbesondere einen Positionsparameter, namentlich eine Position einer Sensorspitze und/oder Werkzeugspitze (21, 22), als Positionsbeziehung der Messvorrichtung und/oder des Werkzeugs (2, 2p, 2g, 25, 26) zu dem Anschlussstück (9) anzuwenden,
wobei
• das System Mittel zur automatischen Identifizierung zumindest eines Teils der Messvorrichtung und/oder des Werkzeugs (2, 2p, 2g, 25, 26) und zur identifikationsbasierten Abfrage des Parameters umfasst, und/oder
• das System so ausgelegt ist, dass die Recheneinheit den von der Messvorrichtung und/oder dem Werkzeug (2, 2p, 2g, 25, 26) bereitgestellten Konfigurationsparameter bei der Montage über eine Datenschnittstelle an dem Anschlussstück (9) empfängt.

12. System nach einem der Ansprüche 9 bis 11,
**dadurch gekennzeichnet, dass**
im Falle einer/eines elektrischen Messvorrichtung und/oder Werkzeugs (2, 2p, 2g, 25, 26) diese/dieses ausschließlich von der Stromversorgungseinheit des tragbaren Geräts mit Strom versorgt wird.

13. Vermessungssystem, umfassend ein optoelektronisches Vermessungsinstrument (11), insbesondere eine Totalstation oder einen Lasertracker, und eine tragbare Vermessungsvorrichtung (1) nach Anspruch 2 mit einer optisch anvisierbaren Markierung (4).

14. Verfahren zur Kalibrierung eines Systems nach Anspruch 9, wobei das Verfahren Folgendes umfasst:
• Bewegen der/des montierten Messvorrichtung und/oder Werkzeugs (2, 2p, 2g, 25, 26) durch den Bediener (10) in mehrere verschiedene Positionen,
• Bestimmen zumindest einiger der Positionen in Bezug auf die Stellungseinheit (3) im Verlauf der Bewegung,
• auf der Grundlage der bestimmten Positionen Definieren einer 6-DoF-Positionsbeziehung des Werkzeugs und/oder der Messvorrichtung (2, 2p, 2g, 25, 26) zur Stellungseinheit (3),
wobei
• das Bewegen ein sphärisches Bewegen ist, indem ein Ende (21) der Messvorrichtung und/oder des Werkzeugs (2, 2p, 2g, 25, 26) an einem Punkt im Raum als Kugelmittelpunkt fixiert ist, sodass es sich bei den Positionen um Positionen des Anschlussstücks (9) und/oder der Messvorrichtung und/oder des Werkzeugs (2, 2p, 2g, 25, 26) auf einer Oberfläche der Kugel handelt, und/oder
• die/das montierte Messvorrichtung und/oder Werkzeug (2, 2p, 2g, 25, 26) eine optische Kalibriermarke (23) umfasst und es sich bei den bestimmten Positionen um Positionen der Kalibriermarke (23) handelt, die auf der Grundlage von Bildern bestimmt werden, die mit einer Kamera (15) der Stellungseinheit (3) aufgenommen werden.

15. Computerprogrammprodukt, das Programmcode umfasst, der auf einem maschinenlesbaren Medium gespeichert ist, oder das durch eine elektromagnetische Welle verkörpert wird, die ein Programmcodesegment umfasst, und das computerausführbare Anweisungen aufweist, um, insbesondere bei Ausführung auf einer Recheneinheit einer Positionierungsvorrichtung nach Anspruch 1, das Verfahren nach Anspruch 14 durchzuführen.

## Revendications

1. Dispositif d'arpentage portable (1) comportant :
• un appareil portable (6) destiné à être porté par un opérateur (10) et comprenant une unité d'alimentation électrique et une unité de calcul,
• un bras articulé (7) comportant :
□ une première extrémité et une deuxième extrémité (e1, e2), la deuxième extrémité (e2) étant reliée de manière pivotante à la première extrémité (e1) par au moins une première articulation (8), la deuxième extrémité (e2) comprenant un raccord (9) destiné au montage, en particulier amovible, d'un outil et/ou d'un dispositif de mesure (2, 2p, 2g, 25, 26) dans une relation de position définie par rapport au raccord (9),
□ au moins un premier codeur, en particulier un codeur angulaire, pour déterminer une position d'articulation,
le bras articulé (7) étant conçu et fixé à l'appareil portable (6) par la première extrémité (e1) de telle sorte que la deuxième extrémité (e2) soit librement et facilement accessible pour l'opérateur (10) et puisse être orientée par l'opérateur (10) directement en saisissant la deuxième extrémité (e2) et/ou indirectement en saisissant un dispositif de mesure et/ou un outil monté (2, 2p, 2g, 25, 26),
• une unité de posture (3) conçue pour déterminer activement et/ou passivement une position et une orientation par rapport à six degrés de liberté (6-DoF), au moins un degré de liberté pouvant être déterminé sur la base d'un signal de posture (B, S) reçu de et/ou pouvant être reçu par une référence de position externe (11), au moins une partie de l'unité de posture (3) étant disposée dans une position exposée lorsque l'appareil portable (6) est porté par l'utilisateur (10), en particulier disposée au-dessus de la tête de l'utilisateur, afin de permettre un trajet de propagation sans obstruction du signal de posture (B, S),
la première extrémité (e1) du bras articulé et l'unité de posture (3) se trouvant dans une relation de position fixe et définie (L) l'une par rapport à l'autre,
l'unité de calcul étant configurée pour déterminer une position et une orientation sur 6 degrés de liberté du dispositif de mesure et/ou de l'outil monté (2, 2p, 2g, 25, 26) par rapport à la référence de position externe (11, W)
• par un référencement sur 6 degrés de liberté de l'unité de posture (3) par rapport à la référence de position externe (11, W) par ladite détermination de la position et de l'orientation sur 6 degrés de liberté et
• par un référencement de position sur 6 degrés de liberté du raccord (9) par rapport à l'unité de posture (3) sur la base d'une détermination de ladite position d'articulation et de ladite relation de position fixe et définie (L) entre la première extrémité (e1) du bras articulé et l'unité de posture (3),
en utilisant ladite relation de position définie du dispositif de mesure et/ou de l'outil (2, 2p, 2g, 25, 26) par rapport au raccord (9).

2. Dispositif d'arpentage (1) selon la revendication 1,
**caractérisé en ce que**
l'unité de posture (3) comprend au moins l'un des éléments suivants :
• un capteur GNSS (14),
• une unité de mesure inertielle (5),
• une caméra (15) pour le référencement de position basé sur une image, en particulier en utilisant une image d'un marqueur de référence externe et/ou en utilisant un algorithme SLAM,
• une marque optique (4) pouvant être visée par un instrument d'arpentage opto-électronique externe (11).

3. Dispositif d'arpentage (1) selon l'une des revendications précédentes,
**caractérisé en ce que**
l'appareil portable (6) est réalisé sous la forme d'un sac à dos ou d'un appareil pouvant être porté à l'épaule et au bras.

4. Dispositif d'arpentage (1) selon l'une des revendications précédentes,
**caractérisé en ce que**
le dispositif d'arpentage (1) comprend
• un pointeur laser pour émettre un faisceau laser visible avec une relation de position définie par rapport à la deuxième extrémité (e2) pour l'indication d'un point d'objet cible (T) et
• une interface homme-machine (29) pour l'indication d'un alignement du faisceau laser sur le point d'objet cible (T).

5. Dispositif d'arpentage (1) selon l'une des revendications précédentes,
**caractérisé en ce que**
le raccord (9) comprend une interface de données pour la réception de données de détection provenant d'un dispositif de mesure et/ou d'un outil monté (2, 2p, 2g, 25, 26) par l'unité de calcul, l'unité de calcul étant configurée pour l'évaluation des données de détection.

6. Dispositif d'arpentage (1) selon l'une des revendications précédentes,
**caractérisé en ce que**
l'unité de calcul est configurée pour évaluer des données de capteur et/ou extraire des données d'une base de données en relation avec une procédure de mesure et/ou d'usinage, générer un message sur la base d'un résultat d'évaluation et délivrer le message à l'opérateur (10) via une interface opérateur (29), le message fournissant à l'opérateur des instructions et/ou un retour d'information concernant la procédure de mesure et/ou d'usinage.

7. Dispositif d'arpentage (1) selon la revendication 6,
**caractérisé en ce que**
la deuxième extrémité (e2) comprend un affichage utilisateur électronique (29) et/ou est conçue pour recevoir et se connecter à un affichage électronique externe, dans lequel
• le dispositif informatique est configuré pour fournir une vue en réalité augmentée (30v) via un écran de l'affichage montrant une image de caméra en direct d'un objet (30) à mesurer et/ou à usiner, la vue en réalité augmentée montrant des données de référence de position réelles et/ou des instructions à l'utilisateur relatives à un processus de mesure et/ou d'usinage, et/ou
• le dispositif d'arpentage (1) est conçu pour adapter automatiquement
□ une position de l'affichage à une orientation de la deuxième extrémité (e2) au moins dans une plage angulaire de ±10° par rapport à une orientation zéro ou de départ et/ou
□ un niveau de zoom affiché à une position de la deuxième extrémité (e2), la position étant déterminée sur la base de la position d'articulation.

8. Dispositif d'arpentage (1) selon l'une des revendications précédentes,
**caractérisé en ce que**
la deuxième extrémité (e2) comprend une interface d'entrée et l'unité de calcul est configurée pour recevoir une entrée utilisateur déterminant ladite relation de position du dispositif de mesure et/ou de l'outil (2, 2p, 25, 26) par rapport au raccord (9).

9. Système de mesure et/ou d'outil comprenant un dispositif d'arpentage portable (1) selon l'une quelconque des revendications précédentes et un outil et/ou un dispositif de mesure (2, 2p, 2g, 25, 26), l'outil et/ou le dispositif de mesure (2, 2p, 2g, 25, 26) étant réalisé sous au moins l'une des formes suivantes :
• un poteau d'arpentage (2p), en particulier un poteau d'arpentage sans unité de posture,
• un instrument électronique de mesure de distance (25),
• un instrument de balayage laser (26),
• un outil électrique (2), en particulier une perceuse ou une scie,
• un dispositif de fixation ou une pince (2g),
• un marqueur, en particulier un pointeur laser ou un marqueur à pulvérisation.

10. Système selon la revendication 9,
**caractérisé en ce que**
le système, en particulier l'unité de calcul, est configuré pour référencer les données de mesure mesurées avec un dispositif de mesure monté (2p, 25, 26) par rapport à la référence de position sur le terrain.

11. Système selon l'une des revendications 9 ou 10,
**caractérisé en ce que**
l'unité de calcul est configurée pour appliquer automatiquement un paramètre de configuration stocké associé à un dispositif de mesure et/ou un outil (2, 2p, 2g, 25, 26), en particulier un paramètre de position, spécifiquement une position d'une pointe de capteur et/ou d'une pointe d'outil (21, 22), en tant que ladite relation de position du dispositif de mesure et/ou de l'outil (2, 2p, 2g, 25, 26) par rapport au raccord (9), dans lequel
• le système comprend des moyens d'identification automatique d'au moins une partie du dispositif de mesure et/ou de l'outil (2, 2p, 2g, 25, 26), et de requête dudit paramètre basée sur identifiant, et/ou
• le système est conçu de telle sorte que l'unité de calcul reçoit le paramètre de configuration fourni par le dispositif de mesure et/ou l'outil (2, 2p, 2g, 25, 26) lors du montage via une interface de données au niveau du raccord (9).

12. Système selon l'une des revendications 9 à 11,
**caractérisé en ce que**
dans le cas d'un dispositif de mesure et/ou d'un outil électrique (2, 2p, 2g, 25, 26), celui-ci est alimenté exclusivement par l'unité d'alimentation électrique de l'appareil portable.

13. Système d'arpentage comprenant un instrument d'arpentage opto-électronique (11), en particulier une station totale ou un laser tracker, et un dispositif d'arpentage portable (1) selon la revendication 2 comportant une marque (4) pouvant être visée optiquement.

14. Procédé d'étalonnage d'un système selon la revendication 9, le procédé consistant à
• déplacer le dispositif de mesure et/ou l'outil monté (2, 2p, 2g, 25, 26) par l'opérateur (10) vers plusieurs positions différentes,
• au cours du déplacement, déterminer au moins certaines des positions par rapport à l'unité de posture (3),
• sur la base des positions déterminées, définir une relation de position sur 6 degrés de liberté de l'outil et/ou du dispositif de mesure (2, 2p, 2g, 25, 26) par rapport à l'unité de posture (3),
dans lequel
• le déplacement est un déplacement sphérique en ce qu'une extrémité (21) du dispositif de mesure et/ou de l'outil (2, 2p, 2g, 25, 26) est fixée à un point dans l'espace en tant que centre de sphère, de sorte que les positions sont des positions du raccord (9) et/ou du dispositif de mesure et/ou de l'outil (2, 2p, 2g, 25, 26) sur une surface de la sphère, et/ou
• le dispositif de mesure et/ou l'outil monté (2, 2p, 2g, 25, 26) comprend une marque d'étalonnage optique (23), et les positions déterminées sont des positions de la marque d'étalonnage (23) qui sont déterminées sur la base d'images capturées par une caméra (15) de l'unité de posture (3).

15. Produit logiciel comprenant un code de programme qui est stocké sur un support lisible par machine, ou qui est matérialisé par une onde électromagnétique comprenant un segment de code de programme, et comportant des instructions exécutables par ordinateur pour mettre en œuvre, en particulier lorsqu'elles sont exécutées sur une unité de calcul d'un dispositif de positionnement selon la revendication 1, le procédé selon la revendication 14.
